Europäisches Patentamt

European Patent Office

Office européen des brevets

(19)

(11) Publication number: **0 434 388 A2**

## EUROPEAN PATENT APPLICATION

(21) Application number: 90313907.9

(22) Date of filing: 19.12.90

(51) Int. Cl.5: **C08F 2/22**, C08F 263/02, C08F 255/02, C08F 265/04, C08F 259/04, //(C08F263/02, 265:00),(C08F255/02,265:00), (C08F265/04,265:00), (C08F259/04,265:00)

(30) Priority: **22.12.89 EP 89313535**

(43) Date of publication of application:
**26.06.91 Bulletin 91/26**

(84) Designated Contracting States:
**AT BE CH DE DK ES FR GB GR IT LI NL SE**

(71) Applicant: **VINAMUL LTD.**
**Mill Lane**
**Carshalton, Surrey SM5 2JU(GB)**

(72) Inventor: **Hallam, Malcolm Francis**
**15 Shadyside Court, Branchburg**
**New Jersey 08876(US)**

(74) Representative: **Roscoe, Brian Corrie et al**
**UNILEVER PLC Patents Division P.O. Box 68**
**Unilever House**
**London EC4P 4BQ(GB)**

(54) Emulsion polymerisation.

(57) A vinyl(C1 to C4)alkanoate/alkylene or alkyl(C1 to C12)acrylate copolymer emulsion is overpolymerised with alkyl acrylates and/or acrylonitrile. The product emulsions are usable as binders for textiles, carpets and paper; they provide improved water and solvent resistance for the treated substrate.

EP 0 434 388 A2

## EMULSION POLYMERISATION

Field of the Invention

The invention relates to overpolymerised copolymer emulsions suitable for application as surface coating or binder, including woven and non-woven materials. The overpolymerised emulsion comprises a base of self-reactive vinyl alkanoate/alkylene or vinyl alkanoate/acrylate copolymer which is modified by the polymerisation in situ of a second group of monomers.

Background to the Invention

Copolymer emulsions for surface coatings or binders may be required to have certain characteristics in respect of their application. For example, binders for non-woven tissues or wipes must give strength to the product, especially when wet, but also feel soft to the touch. Binders for fabrics or interlinings are required to give dimensional stability as well as wash and dry clean resistance. Hence the copolymers for these applications must show a good balance of softness and strength. They must also show sufficient resistance to water and solvents to retain these properties through the application of the product.

Satisfactory properties for these applications may be obtained from (meth)acrylate copolymers, particularly when acrylonitrile is incorporated, but these products tend to be expensive. Key to this invention is a lower cost base polymer which of itself is soft but of modest strength and solvent resistance. By the process of the invention this is modified to have the properties required in the applications. Such properties are not obtained by simple copolymerisation of the chosen monomers because the monomer combinations are difficult to polymerise, are restricted to low conversion and the resulting copolymers have poor strength.

These emulsions are of particular value in coating textiles, for example as binders for non woven fabrics, impregnation of needled carpets to give stability and rigidity, back coating for carpets to give tuft binding and edge fray resistance, and general fabric coating, impregnation and finishing. These emulsions also have value in coating paper products, for example wallpaper ground coats, paper and paper board to give, eg, surface binding and water resistance. These emulsions are of value as binders for non wovens and carpet coating.

General Description of the Invention

The present invention provides overpolymerised copolymers which are based on a core of vinyl(C1 to C4)alkanoate/(C2 to C4)alkylene copolymers or vinyl(C1 to C4) alkanoate/alkyl (C1 to C12) (meth) acrylate copolymers. Such core copolymers are in general self-crosslinkable.

The invention provides copolymer emulsions containing from about 30% to 65% by weight solids, which comprise copolymer particles having an average particle size in the range about 0.1 micron to 10 micron. The particles are derived from a self-crosslinkable vinyl(C1 to C4)alkanoate/(C2 to C4)alkylene or vinyl(C1 to C4)alkanoate/alkyl(C1 to C12) (meth)acrylate copolymer which may optionally be internally crosslinked also. The product of this invention is obtained by overpolymerisation of the base emulsion with from about 3% to about 150% by weight of the base copolymer of alkyl(meth)acrylates, (meth)acrylonitrile and mixtures thereof, optionally including self reactive or crosslinking monomers. The overpolymerisation will usually be in the range from about 5% to about 100%, the latter provides a cost effective benefit.

Vinyl acetate is the preferred alkanoate but vinyl propionate, formate, butyrate and isobutyrate may also be used. The alkylene is preferably ethylene but propylene, butylene and isobutylene may also be used. The acrylate component of the vinyl alkanoate/alkyl(meth)acrylate copolymer is preferably butyl acrylate but any C1 to C12 alkyl acrylate may be used alone or in conjunction with an alkyl methacrylate. Optionally the base copolymer may contain minor monomer components, for example up to about 10% by weight of the monomers. Examples of such monomers are (meth)acrylic acid, (meth)acrylamide, vinyl silanes, vinyl versatates (these monomers could be present up about 60%), vinyl or acrylamido sulphonates and hydroxy functional acrylates. These minor monomer components may also be present in the overpolymerisation. Vinyl chloride is optionally present in the core at a level up to about 60% by weight. The alkylene will usually form from about 5% to 70% by weight of the alkanoate and alkylene content of the core, preferably 10% to 50%. The acrylate will usually form from about 5% to about 70% by weight, preferably 20% to 60%.

It is often preferred that the core emulsion particles be internally crosslinked to enhance some aspects of the performance of the final product. This may be achieved by including a monomer with more than one

2

unsaturated polymerisable group, e.g. triallyl cyanurate, diallyl maleate. For some applications intended for this invention, the base emulsion particles and the final emulsion polymer may each be self reactive to provide the desired physical and chemical properties after the application. This self-reactive facility or self-crosslinking is obtained by using a minor monomer which crosslinks in a separate treatment after the polymerisation process. Suitable examples are N-methylol acrylamide and N-isobutoxymethyl acrylamide.

The overpolymerisation stage is performed using alkyl(C1 to C12)acrylates, methacrylates, (meth)-acrylonitrile or mixtures of these monomers. Preferred monomers are butyl acrylate, methyl methacrylate and acrylonitrile. Optionally and additionally a minor monomer component may be included in this stage. In particular, it is preferred for certain applications that a self-reactive or crosslinkable monomer is included. Examples are N-methylol acrylamide and N-isobutoxymethyl acrylamide. The overpolymerisation may be carried out with slow continuous addition of monomers or by allowing the monomers a period of time to mix thoroughly with the base polymer before reaction or by a process which comprises an element of both techniques. Small amounts of additional, preferably nonionic, or other stabiliser may be added for the overpolymerisation stage. The preferred polymerisation initiator for this stage is a redox couple such as t-butyl hydroperoxide with sodium formaldehyde sulphoxylate.

Test Methods

i) Viscosity: A Brookfield viscometer type RVT was used with the spindle number and speed (rpm) as shown. Measurements were made at 25°C.

ii) Particle size distribution: the weight mean particle diameter was determined with the aid of a Malvern Mastersizer, a laser light scattering technique using very dilute emulsion samples.

iii) Tensile strength: The stress-strain properties were measured on a J J Lloyd tensometer using a 50N load cell, a fixed elongation rate of 10cm/min and a 20°C constant temperature/humidity environment. Testing was carried out on strips of cured (130°C for 10 minutes) polymer film, measuring approx. 4cm x 1cm x 0.3mm. An indication of water resistance of the polymer was obtained by performing the test on cured polymer film which was soaked in water at 20 minutes at 20°C immediately before the test. An indication of solvent resistance was similarly obtained by momentarily dipping the polymer film in acetone immediately before the test.

iv) Linear swelling: 2cm square pieces of the cured (130°C for 10 mins) polymer film, approx. 0.3mm thick, are immersed in perchlorethylene for up to 60 minutes. The dimensions of the polymer sample are measured at various time intervals and the average increase in side length is expressed as a fraction of the original square size to give the linear swelling ratio. The lower ratios indicate a greater resistance of the polymer to this kind of solvent.

v) Acetone extraction: Samples of cured (130°C for various times) polymer film were refluxed in acetone for two hours. The acetone solution was then cooled, filtered and evaporated to dryness to determine the fraction of polymer extracted into the acetone by this process. The acetone insoluble fraction is recorded and is a measure of the development of crosslinking in the polymer.

Specific Description of the Invention

Examples of the copolymer emulsions of the invention, their methods of preparation and their properties are now given to illustrate without limiting the scope of the invention.

Suitable base copolymer emulsions, useful for the overpolymerisation process of this invention, are commercially available products with the following characteristics.

| Polymer type | A | B |
|---|---|---|
|  | VA/E (35%) | VA/acrylate (46%) |
|  | Crosslinking | Crosslinking |
| NMA | 3% | 3% |
| Methacrylic acid | nil | 1% |
| Non-volatile content (%) | 49-51 | 49-51 |
| Viscosity (poise) | 4-16 | 0.4-1.2 |
| (Spindle/speed) | (3/20) | (1/20) |
| pH | 4.5-5.5 | 4-6 |
| Particle size (micron) | 0.1-1.5 | 0.15-0.25 |
| Tg (°C) | -18 | -18 |
| Handle | Very soft | Very soft |
| Stabilising system | Surfactant | Surfactant |
| polarity | Anionic | Anionic |

These copolymer emulsions are obtainable from Vinamul Ltd of Carshalton, England.

Example 1: Overpolymerisation with butyl acrylate/acrylonitrile mixture.

Base polymer emulsion A (490g), having a nominal weight solids content of 49%, was introduced into the reaction vessel, surface purged with nitrogen for 30 minutes and warmed to 50°C. A solution of nonionic surfactant (nonylphenol ethoxylate-30, 4.6g in 21g water) was added and mixed for 15 minutes at 50°C, with further nitrogen purging; this period allows thorough mixing and purging. A monomer mixture comprising butyl acrylate (12g), acrylonitrile (24g) and N-isobutoxymethyl acrylamide (1g) was prepared. The initiator system used was a redox couple comprising t-butyl hydroperoxide (0.3g in 10g water) and sodium formaldehyde sulphoxylate (0.3g in 10g water). The monomers and initiator solutions were added uniformly over two hours, with the polymerisation temperature allowed to rise to 60°C over the first half hour. After the continuous additions, the emulsion was allowed to digest at 60°C for a further 30 minutes with small additions of extra initiator solution as necessary to eliminate residual unreacted monomer.

Example 2: Overpolymerisation with methacrylonitrile.

Base polymer emulsion A (510g), having a nominal weight solids content of 49%, was introduced into the reaction vessel, surface purged with nitrogen for 30 minutes and warmed to 50°C. A monomer mixture comprising methacrylonitrile (25g) and N-isobutoxymethyl acrylamide (0.7g) was added over 30 minutes and mixed at 50°C for 45 minutes, with a gentle nitrogen purge being maintained; this period allows efficient mixing and purging. A solution of nonionic surfactant (nonylphenol ethoxylate-30, 3.2g in 12g water) was added and mixed for 15 minutes at 50°C, with further nitrogen purging. The initiator system used was the same as for example 1, except for the quantity of each component being 0.2g in 10g water. The polymerisation was carried out as for example 1 except that only the initiator solutions required to be added over the two hours.

The application properties obtained by this invention are illustrated by a series of overpolymerisation reactions performed on a vinyl acetate/ethylene base emulsion with different mixtures of butyl acrylate, acrylonitrile and methacrylonitrile using the above processes. Appropriate scaling of the initiator and surfactant quantities was applied according to the amount of monomer used. The overpolymerised copolymers were tested for tensile strength, linear swelling and acetone insolubles. Tables of test results are given with letters A-E representing the copolymer product types as follows:

Percentages are by weight of base copolymer.

A - Unmodified self-reactive VA/E base copolymer.

B - VA/E base overpolymerised with 10% acrylonitrile, 5% butyl acrylate and 0.5% N-isobutox-

4

ymethyl acrylamide.

C - VA/E base overpolymerised with 20% acrylonitrile, 10% butyl acrylate and 1% N-isobutoxymethyl acrylamide.

D - VA/E base overpolymerised with 10% methacrylonitrile and 0.3 N-isobutoxymethyl acrylamide.

E - VA/E base overpolymerised with 20% methacrylonitrile and 0.6% N-isobutoxymethyl acrylamide.

## Table 1: Tensile strength of cured polymer film.

s: peak stress $(N/mm^2)$          e: strain at break (%)

|   | Dry film | | In water | | In solvent | |
|---|---|---|---|---|---|---|
|   | s | e | s | e | s | e |
| A | 1.34 | 261 | 1.16 | 297 | 0.42 | 160 |
| B | 4.26 | 320 | 4.59 | 339 | 1.17 | 169 |
| C | 7.03 | 332 | 7.00 | 348 | 1.13 | 175 |
| D | 4.05 | 348 | 3.93 | 395 | 0.83 | 169 |
| E | 4.16 | 302 | 4.18 | 331 | 1.22 | 163 |

These results demonstrate that the overpolymerisations described increase the tensile strength of the cured polymer film, not only when dry but also in the presence of water or solvent and without reducing the breaking strain.

## Table 2: Linear swelling of cured polymer film

% increase in linear dimension

Time of immersion in solvent (min)

|   | 1 | 2 | 5 | 10 | 60 |
|---|---|---|---|---|---|
| A | 22 | 42 | 53 | 71 | 81 |
| B | 16 | 21 | 38 | 47 | 60 |
| C | 18 | 29 | 39 | 47 | 52 |
| D | 18 | 27 | 42 | 58 | 67 |
| E | 16 | 26 | 41 | 50 | 60 |

These results show that overpolymerisation of the VA/E base copolymer with the (meth)acrylonitrile containing monomer mixtures reduces the tendency of the cured polymer film to swell when immersed in a dry cleaning solvent.

## Table 3: Acetone insolubles of cured polymer film

### % insoluble polymer

#### Time of cure (min)

|   | 5 | 10 |
|---|---|----|
| A | 55 | 80 |
| B | 49 | 65 |
| C | 49 | 71 |
| D | 69 | 84 |
| E | 77 | 85 |

These results demonstrate that the second stage copolymer is crosslinked with the VA/E base. The methacrylonitrile reduces the solubility of the total polymer in acetone whereas the high polarity of acrylonitrile increases the solubility of the total polymer.

Example 3: Overpolymerisation with methacrylonitrile.

Base polymer emulsion B (400g), having a nominal weight solids content of 50%, was introduced into the reaction vessel, surface purged with nitrogen for 30 minutes and warmed to 50° C. A monomer mixture comprising methacrylonitrile (50g) and triallyl cyanurate (0.1g) was added over 30 minutes and mixed at 50° C for 30 minutes, with a gentle nitrogen purge being maintained. A solution of nonionic surfactant (9g in 35g water) was added as in example 2. The initiator system was the same as for example 1 except for the quantity of each component being 0.55g in 20g water. Polymerisation was carried out as for example 1, with the initiator solutions added over 1 hour.

The application properties obtained by this invention are illustrated by a series of overpolymerisation reactions performed on a vinyl acetate/acrylate base emulsion with different amounts of methacrylonitrile. The amounts of initiator, surfactant and triallyl cyanurate are scaled according to the amount of monomer used. The overpolymerised products were tested for linear swelling and tensile strength. Tables of test results are given with letters F-L representing the product as follows:
Percentages are by weight of base copolymer.

F -     Self-reactive VA/acrylate base, no internal crosslinker
G -     Base F overpolymerised with 10% methacrylonitrile
H -     Base F overpolymerised with 25% methacrylonitrile
J -     Self-reactive VA/acrylate base with light internal crosslinking
K -     Base J overpolymerised with 10% methacrylonitrile
L -     Base J overpolymerised with 25% methacrylonitrile

## Table 4:  Linear swelling of cured polymer film

### % increase in linear dimension

| Batch | Time of immersion in solvent (min) | | |
|---|---|---|---|
| | 1 | 2 | 3 |
| J | 62 | 80 | 102 |
| K | 32 | 56 | 79 |
| L | 33 | 51 | 66 |

These results show that overpolymerisation of a VA/acrylate base copolymer with methacrylonitrile and an internal crosslinker reduces the tendency of the cured polymer film to swell when immersed in a dry cleaning solvent.

## Table 5:  Tensile strength of cured polymer film.

### s: peak stress  ($N/mm^2$)          e: strain at break (%)

| | Dry film | | In water | | In solvent | |
|---|---|---|---|---|---|---|
| | s | e | s | e | s | e |
| F | 2.73 | 904 | 2.23 | 975 | 0.35 | 260 |
| G | 3.07 | 878 | 2.98 | 958 | 0.66 | 430 |
| H | 5.98 | 870 | 4.85 | 914 | 0.75 | 413 |
| J | 4.48 | 636 | 2.73 | 529 | 0.72 | 206 |
| K | 5.01 | 552 | 4.72 | 571 | 0.94 | 352 |
| L | 8.99 | 547 | 7.45 | 549 | 2.60 | 313 |

These results show the increase in tensile strength of cured polymer film obtained by the overpolymerisation process above, not only for dry film but also in the presence of water or solvent.

Examples of the application of these emulsions in textile and paper coating will now be given. The emulsions can be compounded into the following formulations using techniques well characterised in the technology. Emulsions for use with non wovens fabrics as binders will usually be compounded with the additives commonly used for modifying fabric properties, examples are surfactants, thickeners, water repellants, antifoam agents and pigments. These additives are also usable in textile manufacture together with dispersants, fillers, flame retardants. The emulsions are usable in wallpaper, paper and board coating to give gloss or matt overcoating. Paper and board can be coated to improve pick resistance, provide gloss, rigidity, ink receptivity. They have low residual odour and good colour.

**Claims**

1. A copolymer emulsion containing from 30% to about 65% by weight solids which comprises copolymer particles having an average particle size in the range 0.1 micron to 10 microns, comprising a core of self-crosslinkable vinyl(C1 to C4)alkanoate/(C2-C4) alkylene or vinyl(C1 to C4)alkanoate/alkyl(C1 to C12)(meth) acrylate copolymer overpolymerised with from 3% to 150% by weight of the base copolymer solids of (C1 to C12)alkyl(meth)acrylates, (meth)acrylonitrile and mixtures thereof.

2. A copolymer emulsion according to claim 1 wherein the vinyl alkanoate/alkylene or vinyl alkanoate/alkyl (meth)acrylate base copolymer is internally crosslinked.

3. A copolymer emulsion according to claims 1 or 2 wherein the base copolymer emulsion is overpolymerised with butyl acrylate, methyl methacrylate, acrylonitrile, methacrylonitrile or mixtures thereof.

4. A copolymer emulsion according to any preceding claim wherein the vinyl alkanoate/alkylene or vinyl alkanoate/alkyl(meth)acrylate core copolymer contains other minor monomer components.

5. A copolymer emulsion according to any preceding claim wherein the monomers of the overpolymerisation stage include other minor monomer components.

6. A copolymer emulsion according to claim 5 wherein the minor monomer components include self-crosslinking monomers such as N-methylolacrylamide or N-isobutoxymethyl acrylamide.

7. A copolymer emulsion according to any preceding claim wherein the core copolymer contains up to about 60% by weight of vinyl versatate or vinyl chloride.

8. A copolymer emulsion according to any preceding claim wherein the core copolymer contains from about 5% to about 70% of alkylene by weight of the alkylene and vinyl alkanoate.

9. The use of the copolymer of claim 1 in the treatment of fabrics, carpets or paper.